# EUROPÄISCHE PATENTANMELDUNG

(11) **EP 4 825 576 A1**
(43) Veröffentlichungstag der Anmeldung: **21.10.2026**
(21) Anmeldenummer: 26168074.8
(22) Anmeldetag: 26.03.2026
(51) Int. Cl.: B32B 7/12, B32B 17/10, B32B 27/08

(54) **VERFAHREN ZUM FÜGEN OPTISCHER SCHICHTEN UND STAPEL OPTISCHER SCHICHTEN**

(30) Priorität: 15.04.2025 DE 102025114816
(71) Anmelder: AUMOVIO Germany GmbH, 60488 Frankfurt am Main (DE)
(72) Erfinder: Braam, Axel, 60488 Frankfurt am Main (DE)
(74) Vertreter: Aumovio Corporation

(57) **Zusammenfassung**

Die Erfindung betrifft ein Verfahren zum Fügen optischer Schichten mit den Schritten
- Bereitstellen (S1) eines ebenen Trägersubstrats (1);
- Versehen (S2) des Trägersubstrats (1) mit einer Randdichtung (7);
- Auftragen (S31) eines optisch klaren Flüssigklebstoffs (51) auf das Trägersubstrat (1);
- Aushärten (S32) des optisch klaren Flüssigklebstoffs (51) zu einer Klebeschicht (41);
- Aufbringen (S33) einer optischen Schicht (21), welche eine kleinere Fläche (F2) aufweist als die von der Randdichtung (7) umschlossene Fläche (F7);
- Auftragen (S41) eines optisch klaren Flüssigklebstoffs (51,52,...) auf die optische Schicht (21,22,...);
- Aushärten (S42) des optisch klaren Flüssigklebstoffs (51,52,...) zu einer Klebeschicht (41,42,...);
- Aufbringen (S43) einer weiteren optischen Schicht (21,22,...), welche eine kleinere Fläche (F2) aufweist als die von der Randdichtung (7) umschlossene Fläche (F7);
- Auftragen (S5) eines optisch klaren Flüssigklebstoffs (51,52,...) auf die optische Schicht (21,22,...);
- Aushärten (S6) des optisch klaren Flüssigklebstoffs (51,52,...) zu einer Klebeschicht (41,42,..); und
- Aufbringen (S7) einer Deckschicht (3.

## Beschreibung

Die vorliegende Erfindung betrifft ein Verfahren zum Fügen optischer Schichten und einen Stapel optischer Schichten.

Optisch aktive oder transparente Folien/Schichten/Gläser werden durch transparente Klebeschichten (OCA, optical clear adhesive) oder durch den Auftrag flüssiger Klebeschichten (OCR, optical clear resin) mit anschließender Härtung schichtweise aufeinander laminiert. Folien/Schichten mit optischer Funktion benötigen eine sehr ebene Oberfläche als Fügepartner. Daher werden solche Folien/Schichten meist auf Glas appliziert. Einzelne auf Glas applizierte Folien/Schichten werden dann zu einem Stapel optischer Folien/Schichten gefügt.

Besonders bei Mehrschicht-Systemen werden diese durch die nötigen Gläser schwer und dick. Zusätzlich erhöhen sich die Kosten durch die Gläser und durch zusätzliche Prozessschritte und/oder Ausschuss.

Eine verbesserte Ausführung ist erwünscht.

Ein erfindungsgemäßes Verfahren zum Fügen optischer Schichten weist folgende Schritte auf:
- Bereitstellen eines Trägersubstrats;
- Versehen des Trägersubstrats mit einer Randdichtung;
- Auftragen eines optisch klaren Flüssigklebstoffs auf das Trägersubstrat;
- Aushärten des optisch klaren Flüssigklebstoffs zu einer Klebeschicht;
- Aufbringen einer optischen Schicht, welche eine kleinere Fläche aufweist als die von der Randdichtung umschlossene Fläche;
- Auftragen eines optisch klaren Flüssigklebstoffs auf die optische Schicht;
- Aushärten des optisch klaren Flüssigklebstoffs zu einer Klebeschicht;
- Aufbringen einer weiteren optischen Schicht, welche eine kleinere Fläche aufweist als die von der Randdichtung umschlossene Fläche;
- Auftragen eines optisch klaren Flüssigklebstoffs auf die optische Schicht;
- Aushärten des optisch klaren Flüssigklebstoffs zu einer Klebeschicht; und
- Aufbringen einer Deckschicht.

Das Trägersubstrat ist mechanisch stabil und dient somit als Basis für alle auf das Trägersubstrat aufzubringenden Elemente. Die Randdichtung begrenzt die Ausdehnung einer darauf aufgebrachten Flüssigkeit, ermöglicht eine bis zum Rand hin reichende Flüssigkeitsschicht und ermöglicht es, dass die auf das Trägersubstrat aufgetragene Flüssigkeit eine planare Oberfläche bildet. Die Flüssigkeitsschicht wird dann bereits ausgehärtet oder teilweise ausgehärtet. Dies fixiert ihre planare Oberfläche. Die auf diese planare Oberfläche aufgebrachte optische Schicht liegt dann parallel zur Oberfläche. Die optische Schicht weist eine kleinere Fläche als die von der Randdichtung umschlossene Fläche auf. Dies ermöglicht es, dass gegebenenfalls durch Kapillareffekte direkt an der Grenze zur Randdichtung hervorgerufene Unebenheiten der ausgehärteten oder teilausgehärteten Flüssigkeit keinen Einfluss auf die Ebenheit der optischen Schicht haben, da zwischen diesen ein ausreichender Abstand besteht.

Durch die Klebewirkung des ausgehärteten optisch klaren Flüssigklebstoffs wird die ebene Ausrichtung der optischen Schicht fixiert. Die danach aufgetragene Flüssigkeit überdeckt sowohl die optische Schicht als auch die aus ausgehärtetem Klebstoff bestehende Klebeschicht im Randbereich zwischen der optischen Schicht und der Randdichtung. Für das Aufbringen der weiteren optischen Schicht gilt das für die erste optische Schicht genannte entsprechend. Die Deckschicht dient zur mechanischen Stabilisierung und/oder zum Schutz vor Umwelteinflüssen mechanischer, chemischer oder anderer Art. Ein Stapel erfindungsgemäß gefügter optischer Schichten weist vorteilhaft mehrere parallel zueinander ausgerichtete optische Schichten auf und hat dennoch ein geringes Gewicht und eine geringe Dicke. Es ist vorteilhaft nur ein stabiles Trägersubstrat erforderlich, statt einem Trägersubstrat pro optischer Schicht.

Gemäß einer Ausführung des Verfahrens wird zumindest eine weitere optische Schicht aufgebracht, welche eine kleinere Fläche aufweist als die von der Randdichtung umschlossene Fläche und mittels optisch klaren Flüssigklebstoffs mit der vorhergehenden beziehungsweise der nachfolgenden Schicht wie zuvor angegeben ausgerichtet und verbunden wird. Auch dies hat den Vorteil, einen leichten, dünnen Stapel mit dennoch gut zueinander ausgerichteten mehreren optischen Schichten zu erhalten.

Gemäß einer Ausführung des Verfahrens wird die Randdichtung in einem weiteren Schritt entfernt. Dies hat den Vorteil einer weiteren Gewichtsreduzierung, wenn die Randdichtung nicht zum Schutz vor mechanischen, chemischen oder anderen Umwelteinflüssen erforderlich ist. Bei geeigneter Materialwahl und/oder geschickter Wahl der Abmessungen wird ein solcher Schutz durch die die optischen Schichten zur Randdichtung hin überdeckende Klebeschicht aus ausgehärteten Lagen Flüssigklebstoffs gewährleistet. Das Entfernen erfolgt beispielsweise beim Entformen, wenn die Oberflächeneigenschaften der Innenseite der Randdichtung eine Trennung beim Entformen ermöglichen. Das Entfernen kann auch durch Abschneiden erfolgen, wobei der Schnitt beispielsweise durch die zwischen Randdichtung und optischen Schichten befindliche Klebeschicht führt. Das Entfernen kann auch auf chemischem Weg erfolgen, beispielsweise durch Wegätzen der Randdichtung.

Gemäß einer Ausführung des Verfahrens wird die aus aufeinandergeschichteten Klebeschichten bestehende, die optischen Schichten umgebenden Randschicht, die aus ausgehärtetem optisch klarem Klebstoff besteht, komplett entfernt. Dies hat den Vorteil einer weiteren Gewichtsreduktion und ist besonders dann sinnvoll, wenn auch ohne diese Randschicht ein ausreichender Schutz vor mechanischen, chemischen oder anderen Umwelteinflüssen gegeben ist.

Ein erfindungsgemäßer Stapel optischer Schichten, der insbesondere nach einem erfindungsgemäßen Verfahren hergestellt ist, weist ein Trägersubstrat auf, zwei oder mehrere optische Schichten, welche parallel zueinander ausgerichtet sind, eine Deckschicht, und aus ausgehärtetem optisch klarem Klebstoff bestehende Klebeschichten, welche zwischen Trägersubstrat und diesem benachbarter optischer Schicht, zwischen einzelnen benachbarten optischen Schichten, und zwischen Deckschicht und dieser benachbarter optischer Schicht angeordnet sind. Ein solcher Stapel optischer Schichten weist vorteilhaft mehrere parallel zueinander ausgerichtete optische Schichten auf und hat dennoch ein geringes Gewicht und eine geringe Dicke. Es ist nur ein stabiles Trägersubstrat erforderlich, anstatt einem Trägersubstrat pro optische Schicht.

Gemäß einer Ausführung weist der Stapel optischer Schichten eine Randschicht auf, die zwischen Trägersubstrat und Deckschicht durchgängig ausgeführt ist und die optischen Schichten umschließt. Diese Randschicht besteht aus den aufeinanderfolgenden Klebeschichten, welche aus ausgehärtetem optisch klarem Klebstoff bestehen. Diese Randschicht bietet vorteilhaft Schutz vor mechanischen, chemischen oder anderen Umwelteinflüssen.

Gemäß einer Ausführung weist der Stapel optischer Schichten eine die Randschicht umschließende Randdichtung auf. Dies verbessert nochmals vorteilhaft den Schutz vor mechanischen, chemischen oder anderen Umwelteinflüssen.

Vorteilhaft ist die optische Schicht eine optische Folie. Insbesondere handelt es sich bei der oder bei den optischen Schichten um optisch aktive Schichten, die meist sehr dünne Kunststofffolien sind. Damit deren optische Eigenschaften zum Tragen kommen, müssen diese optisch aktiven Schichten parallel zueinander ausgerichtet sein. Dies wird durch die nivellierende Eigenschaft des erfindungsgemäß eingesetzten optisch klaren Flüssigklebstoffs ermöglicht.

Das Trägersubstrat besteht beispielsweise aus Glas oder Kunststoff. Vorteilhaft besteht das Trägersubstrat aus Glas. Glas weist eine Oberflächenbeschaffenheit auf, die die optischen Eigenschaften daran angrenzender optischer Elemente nicht oder nur geringfügig beeinträchtigt. So weist Glas beispielsweise eine sehr geringe Oberflächenrauheit auf. Auch andere Oberflächeneigenschaften von Glas sind hier günstig. Die Erfindung ermöglicht es, auch Kunststoff als Trägersubstrat vorteilhaft einzusetzen. Die ansonsten als negativ angesehene Oberflächenrauheit von Kunststoff wird durch die darauf aufgetragene Schicht optisch klaren Flüssigklebstoffs kompensiert, da dieser diese und andere Oberflächeneigenschaften nivelliert. Die nivellierte planare Oberfläche wird durch Aushärten, welches auch ein teilweises Aushärten sein kann, fixiert. Dadurch ist auch die Verwendung von kostengünstig herstellbarem Trägersubstrat aus Kunststoff ermöglicht.

Vorteilhaft besteht die Deckschicht aus Glas. Der große Vorteil von Glas ist die Dichtigkeit gegenüber Wasser und Sauerstoff.

Weitere Ausgestaltungen der Erfindung und deren Vorteile können auch der nachfolgenden Figurenbeschreibung entnommen werden. Dabei zeigen
- Fig.1: ein erfindungsgemäßes Verfahren
- Fig.2-11: einen erfindungsgemäßen Stapel optischer Schichten in unterschiedlichen Stadien seiner Herstellung.

Zum besseren Verständnis der Prinzipien der vorliegenden Erfindung werden nachfolgend Ausführungsformen der Erfindung anhand der Figuren detaillierter erläutert. Gleiche Bezugszeichen werden in den Figuren für gleiche oder gleichwirkende Elemente verwendet und nicht notwendigerweise zu jeder Figur erneut beschrieben. Es versteht sich, dass sich die Erfindung nicht auf die dargestellten Ausführungsformen beschränkt und dass die beschriebenen Merkmale auch kombiniert oder modifiziert werden können, ohne den Schutzbereich der Erfindung zu verlassen, wie er in den angehängten Ansprüchen definiert ist.

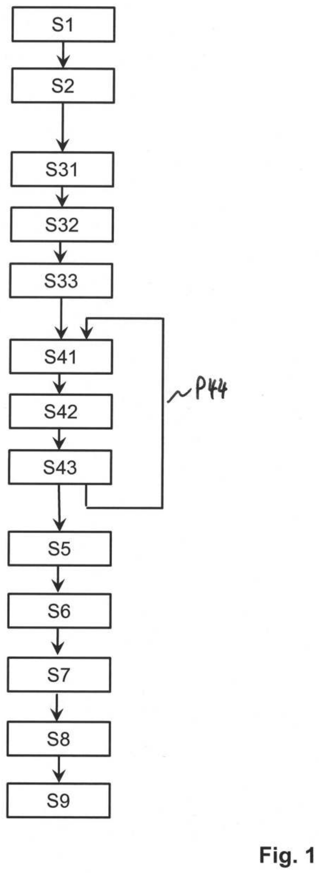

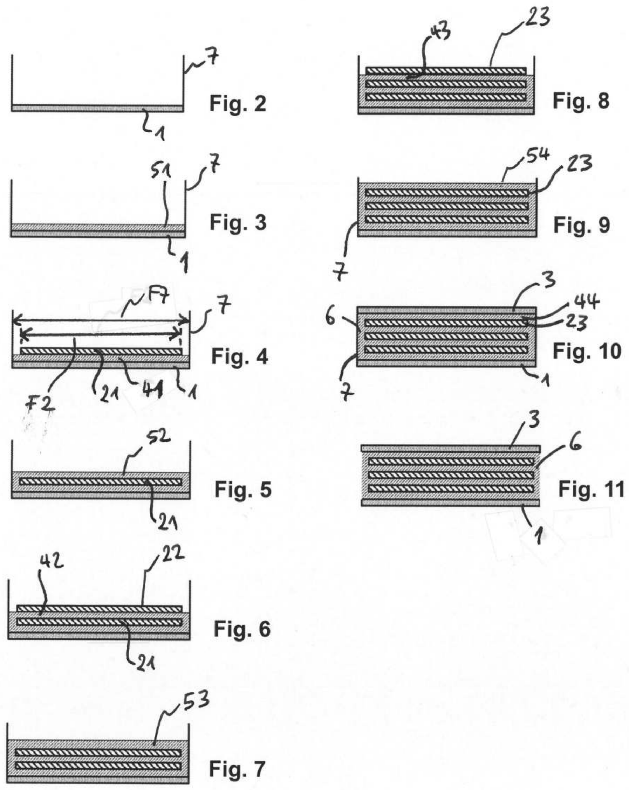

Fig.1 zeigt ein Flussdiagramm für ein erfindungsgemäßes Verfahren. Dieses wird auch in Zusammenschau mit den Fig.2-11 beschrieben.

In einem ersten Schritt erfolgt ein Bereitstellen S1 eines ebenen Trägersubstrats 1. In einem zweiten Schritt erfolgt ein Versehen S2 des Trägersubstrats 1 mit einer Randdichtung 7. Das Trägersubstrat 1 wird dann waagerecht angeordnet, die Randdichtung 7 schließt sich an den Rand des Trägersubstrats 1 nach oben an, oder umschließt auch noch diesen Rand. Dies ist auch in Fig.2 gezeigt.

Fig.3 zeigt das Ergebnis eines weiteren Herstellungsschritts. Es erfolgt ein Auftragen S31 eines optisch klaren Flüssigklebstoffs 51 auf das Trägersubstrat 1. Der aufgetragene Flüssigklebstoff 51 lässt eine planare Oberfläche entstehen, die gegebenenfalls vorhandene Unebenheiten des Trägersubstrats 1 ausgleicht. Diese planare Oberfläche wird zum Fügen einer optisch aktiven Schicht, der optischen Schicht 21, benötigt. Durch die Nivellierung der flüssigen Schicht aufgetragenen Flüssigklebstoffs 51 werden alle Unebenheiten des Trägersubstrats 1 ausgeglichen.

Fig.4 zeigt das Ergebnis weiterer Herstellungsschritte. Es erfolgt ein Aushärten S32 des optisch klaren Flüssigklebstoffs 51 zu einer Klebeschicht 41. Die planare Oberfläche wird dabei fixiert. In einem weiteren Schritt erfolgt ein Aufbringen S33 einer optischen Schicht 21, welche eine kleinere Fläche F2 aufweist als die von der Randdichtung 7 umschlossene Fläche F7, auf die planare Oberfläche der Klebeschicht 41.

Fig.5 zeigt das Ergebnis eines weiteren Herstellungsschritts. Es erfolgt ein Auftragen S41 eines optisch klaren Flüssigklebstoffs 52 auf die optische Schicht 21. Dabei wird auch der Bereich zwischen optischer Schicht 21 und Randdichtung 7 mit optisch klarem Flüssigklebstoff 52 gefüllt.

Fig.6 zeigt das Ergebnis weiterer Herstellungsschritte. Es erfolgt ein Aushärten S42 des optisch klaren Flüssigklebstoffs 52 zu einer Klebeschicht 42 mit planarer Oberfläche. In einem weiteren Schritt erfolgt ein Aufbringen S43 einer weiteren optischen Schicht 22, welche ebenfalls eine kleinere Fläche F2 aufweist als die von der Randdichtung 7 umschlossene Fläche F7, auf die planare Oberfläche der Klebeschicht 42.

Fig.7 zeigt das Ergebnis eines weiteren Herstellungsschritts. Dabei erfolgt ein Auftragen S41 eines optisch klaren Flüssigklebstoffs 53 auf die optische Schicht 22.

Fig.8 zeigt das Ergebnis weiterer Herstellungsschritte. Dabei erfolgt ein Aushärten S42 des optisch klaren Flüssigklebstoffs 53 zu einer Klebeschicht 43 mit planarer Oberfläche. In einem weiteren Schritt erfolgt ein Aufbringen S43 einer weiteren optischen Schicht 23, welche ebenfalls eine kleinere Fläche F2 aufweist als die von der Randdichtung 7 umschlossene Fläche F7, auf die planare Oberfläche der Klebeschicht 43.

Man erkennt, dass hierbei die Schritte S41-S43 wiederholt wurden. Dies ist in Fig.1 mit dem Pfeil P44 angedeutet. Weitere Wiederholungen zum Aufbringen weiterer optischer Schichten können erfolgen, sind hier aber zu den Fig.2-11 nicht gezeigt.

Fig.9 zeigt das Ergebnis eines weiteren Herstellungsschritts. Dabei erfolgt ein Auftragen S5 eines optisch klaren Flüssigklebstoffs 54 auf die optische Schicht 23.

Fig.10 zeigt einen erfindungsgemäßen Stapel optischer Schichten als Ergebnis weiterer Herstellungsschritte. Dabei erfolgt zunächst ein Aushärten S6 des optisch klaren Flüssigklebstoffs 54 zu einer Klebeschicht 44. Anschließend erfolgt ein Aufbringen S7 einer Deckschicht 3 auf die Klebeschicht.

Fig.11 zeigt einen erfindungsgemäßen Stapel optischer Schichten als Ergebnis des Weiteren optionalen Herstellungsschritts Entfernen S8 der Randdichtung 7. Man erkennt, dass die optischen Schichten 21,22,23 nach außen durch eine Randschicht 6 abgegrenzt sind, welche aus ausgehärtetem optisch klarem Flüssigklebstoff 51-54 besteht.

Ein weiterer optionaler Herstellungsschritt, dessen Ergebnis hier nicht gezeigt ist, besteht im Entfernen S9 der die optischen Schichten 21,22,23 umgebenden Randschicht 6, die aus ausgehärtetem optisch klarem Klebstoff 51-54 besteht.

Mit anderen Worten betrifft die Erfindung das Fügen optischer Schichten mit sehr hoher Anforderung an deren Oberflächenebenheit. Sie bietet Verbesserungen in Bezug auf Herstellbarkeit und Ausschussraten im Vergleich zu bekannten Technologien zum Fügen optischer Schichten.

Anstelle der Applikation von optischen Folien beziehungsweise optischen Schichten mit optischer Funktion auf Gläser kann durch den erfindungsgemäßen schichtweisen Aufbau mit optisch klarem Flüssigklebstoff (englisch: OCR - Optically Clear Resin) eine ebene Fläche generiert werden auf die die nächste optische Folie / Schicht mit optischer Funktion auflaminiert werden kann. Da erfindungsgemäß keine Gläser als Fügepartner benötigt werden, reduzieren sich die Kosten auch durch Einsparung von Prozessschritten und dem damit verbundenen Ausschuss. Weiter können auch nicht-klebende Materialien verarbeitet werden ohne dass eine zusätzliche Klebeschicht, sei es eine auf fester Basis bestehende Klebeschicht (englisch: OCA - Optically Clear Adhesive) oder eine aus ausgehärtetem Flüssigklebstoff (OCR) bestehende, erforderlich wäre.

### Bezugszeichenliste

- 1: Trägersubstrat
- 21,22,...: optische Schicht
- 3: Deckschicht
- 41,42,...: Klebeschicht
- 51,52,..: optisch klarer Flüssigklebstoff
- 6: Randschicht
- 7: Randdichtung

- F2: Fläche, einer optischen Schicht
- F7: Fläche, von der Randdichtung umschlossen

- P44: Pfeil

- S1-S43: Verfahrensschritte

## Patentansprüche

1. Verfahren zum Fügen optischer Schichten mit den Schritten
- Bereitstellen (S1) eines Trägersubstrats (1);
- Versehen (S2) des Trägersubstrats (1) mit einer Randdichtung (7);
- Auftragen (S31) eines optisch klaren Flüssigklebstoffs (51) auf das Trägersubstrat (1);
- Aushärten (S32) des optisch klaren Flüssigklebstoffs (51,52,...) zu einer Klebeschicht (41,42,...);
- Aufbringen (S33) einer optischen Schicht (21,22,...), welche eine kleinere Fläche (F2) aufweist als die von der Randdichtung (7) umschlossene Fläche (F7), auf diese Klebeschicht (41,42,...);
- Auftragen (S41) eines optisch klaren Flüssigklebstoffs (51,52,...) auf die optische Schicht (21,22,...);
- Aushärten (S42) des optisch klaren Flüssigklebstoffs (51,52,...) zu einer Klebeschicht (41,42,...);
- Aufbringen (S43) einer weiteren optischen Schicht (21,22,...), welche eine kleinere Fläche (F2) aufweist als die von der Randdichtung (7) umschlossene Fläche (F7), auf diese Klebeschicht (41,42,...);;
- Auftragen (S5) eines optisch klaren Flüssigklebstoffs (51,52,...) auf die optische Schicht (21,22,...);
- Aushärten (S6) des optisch klaren Flüssigklebstoffs (51,52,...) zu einer Klebeschicht (41,42,...); und
- Aufbringen (S7) einer Deckschicht (3) auf diese Klebeschicht (41,42,...).

2. Verfahren gemäß Anspruch 1, wobei die Schritte
- Auftragen (S41) eines optisch klaren Flüssigklebstoffs (51,52,...) auf die optische Schicht (21,22,...);
- Aushärten (S42) des optisch klaren Flüssigklebstoffs (51,52,...) zu einer Klebeschicht (41,42,...); und
- Aufbringen (S43) einer weiteren optischen Schicht (21,22,... ), welche eine kleinere Fläche (F2) aufweist als die von der Randdichtung (7) umschlossene Fläche (F7), auf diese Klebeschicht (41,42,...);
ein- oder mehrfach wiederholt werden.

3. Verfahren gemäß einem der vorhergehenden Ansprüche, mit dem weiteren Schritt
- Entfernen (S8) der Randdichtung (7).

4. Verfahren gemäß einem der vorhergehenden Ansprüche, mit dem weiteren Schritt
- Entfernen (S9) einer die optischen Schichten (21,22,...) umgebenden Randschicht (6), die aus ausgehärtetem optisch klarem Klebstoff (51,52,...) besteht.

5. Stapel optischer Schichten, insbesondere hergestellt nach einem Verfahren gemäß einem der vorhergehenden Ansprüche, aufweisend:
- ein Trägersubstrat (1);
- zwei oder mehrere optische Schichten (21,22,...), welche parallel zueinander (1) ausgerichtet sind;
- eine Deckschicht (3); und
- aus ausgehärtetem optisch klarem Klebstoff (51,52,...) bestehende Klebeschichten (41,42,...), welche zwischen Trägersubstrat (1) und diesem benachbarter optischer Schicht (21), zwischen einzelnen benachbarten optischen Schichten (21,22,...), und zwischen Deckschicht (3) und dieser benachbarter optischer Schicht (23) angeordnet sind.

6. Stapel optischer Schichten gemäß Anspruch 5, weiterhin aufweisend eine zwischen Trägersubstrat (1) und Deckschicht (3) durchgängig die optischen Schichten (21,22,...) umschließende Randschicht (6), welche aus ausgehärtetem optisch klarem Klebstoff (51,52,...) besteht.

7. Stapel gemäß Anspruch 6, weiterhin aufweisend eine die Randschicht (6) umschließende Randdichtung (7).

8. Verfahren oder Stapel gemäß einem der vorhergehenden Ansprüche, wobei die optische Schicht (21,22,...) eine optische Folie ist.

9. Verfahren oder Stapel gemäß einem der vorhergehenden Ansprüche, wobei das Trägersubstrat (1) aus Glas besteht.

10. Verfahren oder Stapel gemäß einem der vorhergehenden Ansprüche, wobei die Deckschicht (3) aus Glas besteht.
